# EUROPÄISCHE PATENTANMELDUNG

(11) **EP 1 065 901 A2**
(43) Veröffentlichungstag der Anmeldung: **03.01.2001**
(21) Anmeldenummer: 00111522.9
(22) Anmeldetag: 29.05.2000
(51) Int. Cl.: H04Q 7/24

(54) **Verfahren zum Herstellen einer Telekommunikationsverbindung über ein Zwischennetz**

(30) Priorität: 30.06.1999 DE 19930146
(71) Anmelder: SIEMENS AKTIENGESELLSCHAFT, 80333 München (DE)
(72) Erfinder: Becher, Reinhard, Dr., 81245 München (DE)

(57) **Zusammenfassung**

Zum Herstellen einer Telefonverbindung von einem rufenden Teilnehmer (TRA) zu einem mobilen Bestimmungsteilnehmer (TRB) unter Verwendung einer Verbindungsteilstrecke in einem paketorientierten Kommunikationsnetz (IG1,IG2), z.B. dem Internet, wird seitens des Netzes (VSA,SCP) des rufenden Teilnehmers
a) zumindest eine spezifische Anforderungsnachricht (ati) an das Heimatregister (HLB) und/oder eine Besuchervermittlung (VSB) des Bestimmungsnetzes gesendet und eine den aktuellen Aufenthaltsbereich des Bestimmungsteilnehmers betreffende Zielleitinformation (vid) entgegengenommen,
b) anhand dieser Zielleitinformation (vid) eine Leitwegadresse (lwa) erstellt, welche neben Zielinformation betreffend den Bestimmungsteilnehmer (TRB) und/oder eine Leitwegführung im Bestimmungsnetz (GT2,VSB) Trägerinformation betreffend die Herstellung einer Verbindungsstrecke über das Zwischennetz (IPN) aufweist, und
c) die so erhaltene Leitwegadresse (lwa) als Rufadresse für die Herstellung einer Verbindung über das Zwischennetz zu dem Bestimmungsteilnehmer (TRB) verwendet.

## Beschreibung

Die Erfindung betrifft ein Verfahren zum Herstellen einer Telekommunikationsverbindung in Telefonnetzen unter Verwendung eines paketorientierten Kommunikationsnetzes, in welchem zwischen Zugangsknoten als Verbingsteilstrecken für Telefonverbindungen einsetzbare Zwischenverbindungen herstellbar sind, als Zwischennetz,
bei welchem aufgrund einer Verbindungsanforderung eines rufenden Teilnehmers eines Ursprungs-Telefonnetzes für eine Verbindung zu einem Bestimmungsteilnehmer, welcher als mobiler Teilnehmer in einem Bestimmungs-Telefonnetz mit einem Heimatregister zur Speicherung von Teilnehmer-Erreichbarkeitsinformationen angemeldet ist, wobei die Verbindungsanforderung bei einem Ursprungs-Netzknoten des Ursprungsnetzes eintrifft, eine Verbindung
- von dem rufenden Teilnehmer in dem Ursprungsnetz zu einem Zugangsknoten, welcher als Eingangsknoten an das Ursprungsnetz angeschlossen ist,
- von dem Eingangsknoten über eine Verbindungsteilstrecke in dem Zwischennetz zu einem anderen Zugangsknoten, welcher als Ausgangsknoten an das Bestimmungsnetz angeschlossen ist, und
- von dem Zugangsknoten in das Bestimmungsnetz hergestellt sowie in dem Bestimmungsnetz zu dem Bestimmungsteilnehmer geleitet wird.

Derartige Verfahren, mittels derer Telefonverbindungen unter Einsatz eines paketorientierten Netzes, insbesondere eines Datennetzes wie des Internet, aufgebaut werden, sind unter dem Schlagwort 'Voice over IP, ( 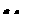 Stimme über IP") oder dem Begriff Internet-Telefonie bekannt. Hierbei steht IP für das bekannte Internet Protokoll, nach dem das Internet als mittlerweile weltumspannender Verbund von Computernetzen (nämlich von solchen, in denen der Datenaustausch nach dem Internet Protokoll erfolgt) benannt ist.

Für die Zwecke der Erfindung können das Ursprungsnetz und das Bestimmungsnetz dasselbe Telefonnetz oder voneinander verschiedene Telefonnetze sein, wobei ein Telefonnetz insbesondere ein Mobilfunknetz oder sogar ein Mobilfunk-Netzverbund sein kann. In zu einem Netzverbund zusammengeschlossenen Mobilfunknetzen ist es für einen mobilen Teilnehmer, der in einem Netz ( 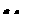 Heimatnetz") des Verbundes angemeldet ist, möglich, sich im Einzugsbereich eines anderen Netzes des Verbunds ( 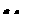 Aufenthaltsnetz" oder 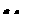 Besuchernetz") zu bewegen und dort einzubuchen.

Ein Verbindungsaufbau gemäß einem bekannten Internet-Telefonie-Verfahren erfolgt auf der Grundlage des Standards ITU-H.323, 'Packet-based multimedia communication systems', der Internationalen Telekommunikations-Vereinigung (ITU) beispielsweise wie folgt:

Ein rufender Teilnehmer - welcher Teilnehmer eines als Festnetz oder als Mobilfunknetz, z.B. GSM-Netz, ausgebildeten Telefonnetzes ist, welches hier als Ursprungsnetz bezeichnet werden soll - wählt eine Telefonnummer welche ihn mit einem Internettelefonie-Anbieter (einem sogenannten 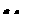 Internet Service Provider") verbindet. Zusätzlich wählt er, entweder direkt anschließend an die Nummer des Anbieters oder nach einer diesbezüglichen Aufforderung seitens des Anbieters, die Rufnummer des gewünschten Bestimmungsteilnehmers.

Die Rufnummer des Internettelefonie-Anbieters, welche der rufende Teilnehmer gewählt hat, spezifiziert einen Zugangsknoten des Internettelefonie-Anbieters zu welchem im Ursprungsnetz eine Verbindung hergestellt wird. Der Zugangsknoten, häufig auch als 'Point Of Presence' (POP) bezeichnet, dient als Eingangsknoten für den Übergang von dem Ursprungsnetz in das Internet. Aufgrund der Rufnummer des Bestimmungsteilnehmers wird ein weiterer Zugangsknoten des Internet bestimmt, welcher als Ausgangsknoten bezüglich des Zieles, d.h. des Telefonnetzes des Bestimmungsteilnehmers am günstigsten gelegen ist. Innerhalb des Internet wird bei der Erzeugung einer 'Voice over IP'-Verbindung die hierfür erforderliche Adressierung und Zielbewertung, einschließlich der Auswahl des Ausgangsknotens, durch einen sogenannten Gatekeeper ausgeführt, vgl. hierzu den erwähnten ITU-H.323. Gemäß diesem Standard ist der Eingangsknoten an ein Vermittlungsamt des Ursprungsnetzes über ein Teilnehmeranschlussprotokoll, angebunden und hat somit eine sogenannte E.164-Adresse, durch die er in dem Telekommunikationsnetz adressierbar ist. Entsprechendes gilt für den Ausgangsknoten mit bezug auf das Bestimmungsnetz. Über das Internet werden die zum Verbindungsaufbau von den Telefonnetzen benötigten Daten, wie etwa die Rufnummer des rufenden Teilnehmers, jene des Bestimmungsteilnehmers etc., ausgetauscht; zusätzlich werden zwischen den beiden Zugangsknoten sogenannte Rufreferenzen ausgetauscht, welche sicherstellen sollen, dass die gesendeten Datenpakete mit dem richtigen Empfänger (und auch Sender) abgesendet werden und beim Empfänger wieder der Verbindung zugeordnet werden können.

An dieser Stelle sei angemerkt, dass die Übertragung der Informationen, welche zwischen den Zugangsknoten ausgetauscht werden, in dem als Zwischennetz dienenden Datennetz nicht über eine Verbindung unter Belegung von Übertragungsmitteln (wie etwa einer Leitung) erfolgen muss, sondern unter Ausnutzung des paketorientierten Datenaustauschs über z.B. eine sogenannte virtuelle Verbindung erfolgen kann. Für die Erfindung ist die Art der Zwischenverbindung, die zwischen den Zugangsknoten hergestellt wird, sofern sie den Anforderungen für eine Verbindungsteilstrecke zwischen dem Ursprungs- und dem Bestimmungsnetz genügt, nicht von Belang.

Vom Ausgangsknoten wird nach wohlbekannter Art eine Telekommunikationsverbindung über das Bestimmungsnetz zu dem Bestimmungsteilnehmer aufgebaut. Gemeinsam mit der Verbindungsstrecke im Ursprungsnetz und der 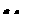 Verbindungsstrecke" im Internet bildet nun die Verbindungsstrecke im Bestimmungsnetz die gewünschte Verbindung zwischen dem rufenden Teilnehmer und dem Bestimmungsteilnehmer.

Ist der Bestimmungsteilnehmer ein mobiler Teilnehmer, so erfolgt die Herstellung der Verbindungsstrecke, entsprechend den Angaben der Rufnummer des Bestimmungsteilnehmers, im Bestimmungsnetz über einen Vermittlungsknoten des Heimatnetzes oder Heimatbereichs des Bestimmungsteilnehmers; befindet sich der Teilnehmer in einem anderen Netzbereich oder Mobilnetz, so muss von dem Vermittlungsknoten aufgrund der im Heimatregister des Heimatnetzes geroutet werden. Eine Optimierung der Verbindungsstrecken findet nicht statt.

Bei den bekannten Verfahren ist gemäß den ETSI-Spezifikationen GSM 02.79 und GSM 03.79 ein sogenanntes 'Optimal Routing' ( 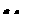 Optimale Leitwegführung") in Verbindung mit 'Voice over IP' -Diensten nur dann möglich, wenn der gerufene Teilnehmer sich im eigenen Heimatnetz oder im Aufenthaltsnetz des rufenden Teilnehmers befindet. Trifft diese Bedingung nicht zu, so erfolgt das Routing der Verbindung von dem rufenden Teilnehmer über das Heimatnetz des gerufenen Teilnehmers zu dem gerufenen Teilnehmer. Dies erfolgt auch aus Gründen der eindeutigen Gebührenberechnung, da so dem rufenden Teilnehmer die Gebühren von seinem Aufenthaltsnetz zum Heimatnetz des gerufenen Teilnehmers berechnet werden und dem gerufenen Teilnehmer - sofern dieser sich nicht in seinem Heimatnetz aufhält - die Gebühren für die Verbindung von seinem Heimatnetz in sein aktuelles Besuchsnetz; bei einem anderen Routingweg könnte die Gebührenaufteilung zwischen den beiden Teilnehmer nicht mehr nach eindeutigen Regeln durchgeführt werden.

Es ist daher Aufgabe der Erfindung, die Verbindungsherstellung bei Verwendung eines Datennetzes nach dem Internettelefonie-Prinzip, insbesondere das Routing, dahingehend zu verbessern, dass ein günstigeres Routing der Verbindungsstrecken erfolgt. Hierbei soll insbesondere die Wahl des Ausgangsknotens und/oder des vom Ausgangsknoten adressierten Vermittlungsknotens des Bestimmungsnetzes optimiert werden.

Die Aufgabe wird von einem Verfahren der eingangs genannten Art gelöst, bei welchem erfindungsgemäß seitens des Ursprungsnetzes
a) zumindest eine spezifische Anforderungsnachricht an das Heimatregister und/oder eine Besuchervermittlung des Bestimmungsnetzes gesendet wird und eine den aktuellen Aufenthaltsbereich des Bestimmungsteilnehmers betreffende Zielleitinformation entgegengenommen wird,
b) anhand dieser Zielleitinformation eine Leitwegadresse erstellt wird, welche neben Zielinformation betreffend den Bestimmungsteilnehmer und/oder eine Leitwegführung im Bestimmungsnetz Trägerinformation betreffend die Herstellung einer Verbindungsstrecke über das Zwischennetz aufweist, und
c) die so erhaltene Leitwegadresse als Rufadresse für die Herstellung einer Verbindung über das Zwischennetz zu dem Bestimmungsteilnehmer verwendet wird.

Diese Lösung ermöglicht eine Optimierung der gesamten Leitwegführung von dem rufenden Teilnehmer zu dem Bestimmungsteilnehmer, insbesondere auch hinsichtlich der Teilverbindung im Bestimmungsnetz. Wie weiter unten näher erläutert, kann die Leitwegadresse z.B. eine Besucherregister-Identifikationsnunmer ('Visiting Location Register Identification', vlrId) der Besuchervermittlung des Bestimmungsteilnehmers oder eine dem Bestimmungsteilnehmer zugeteilte MSRN-Nummer ('Mobile Station Roaming Number') enthalten.

Auch ist bei der Anwendung der Erfindung eine Vergebührungsaufteilung auf die beteiligten Teilnehmer in der Regel unproblematisch, da Datenverbindungen im Paketnetz entfernungsunabhängig vergebührt werden. Somit können dem rufenden Teilnehmer die Gebühren im Ursprungsnetz und jene für die Verbindungsstrecke über das Zwischennetz (letztere wird gewöhnlich an einen Betreiber gezahlt) zugewiesen werden, während sich für den Bestimmungsteilnehmer eine Situation ergibt, als ob das Gespräch in seinem Besuchsnetz entstanden wäre und somit üblicherweise gebührenfrei ist.

In vielen Telekommunikationsnetzen sind neben den Grunddiensten, wie z.B. dem Telefon- und Facsimiledienst eines Telefonnetzes, Zusatzdienste eingerichtet, die von einem Teilnehmer des Netzes angesprochen werden können, beispielsweise eine Anrufumleitung oder eine Abfrage der aufgelaufenen Gesprächsgebühren eines Teilnehmers. Für die Verwaltung und Durchführung der Dienste ist in dem Netz oft ein eigener Netzknoten vorgesehen, welcher als Dienstesteuerknoten oder SCP ('Service Control Point') oder, insbesondere im sogenannten CAMEL-Standard für GSM-Netze, als CSE ('C 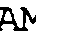 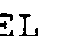 Service Environment', vgl. ETSI-Spezifikationen GSM 03.78, GSM 09.78, und GSM 09.02, bezeichnet wird. Im allgemeinen ist die Dienstesteuerknoten von den Vermittlungseinrichtungen des Intelligenten Netzes verschieden. Günstigerweise kann die Durchführung des erfindungsgemäßen Verfahrens dadurch vereinfacht und in einem Netzknoten des Ursprungsnetzes zentralisiert werden, dass der Ursprungsnetzknoten aufgrund der Verbindungsanforderung einen Dienst eines Dienstesteuerknotens des Heimatnetzes aufruft, durch welchen die Anforderung der Zielleitinformation und das Erstellen der Leitwegadresse ausgeführt und die Leitwegadresse dem Ursprungsnetzknoten zugeleitet wird.

Es ist des weiteren günstig, besonders im Hinblick auf die weite Verbreitung von Computernetzen und den großen Erfolg des Internet in den letzten Jahren, wenn als Zwischennetz ein auf dem TCP/IP-Protokoll beruhendes Datennetz, z.B. das Internet, verwendet wird.

In einer besonders zweckmäßigen Ausführungsform der Erfindung ist der Bestimmungsteilnehmer in einem Mobilfunknetzverbund, insbesondere GSM-Netzverbund, angemeldet, in welchem die dem Teilnehmer zugeordneten Erreichbarkeitsinformationen seitens des Heimatregisters des dem Teilnehmer zugeordneten Heimatnetzes gespeichert werden.

Ebenso ist es zur Vereinfachung der Erstellung der Leitwegadresse und des Aufbaus der Verbindungsteilstrecke im Zwischennetz vorteilhaft, wenn die Zielleitinformation das Besuchernetz angibt, in welches der Bestimmungsteilnehmer eingebucht ist.

In einer weiteren zweckmäßigen Ausführungsform der Erfindung, in der die Infrastruktur eines Mobilfunknetzes vorteilhafterweise nutzbar ist, ist der Ursprungs-Netzknoten ein Mobilvermittlungsknoten eines Mobilfunknetzes bzw. -netzverbundes, in dessen Einzugsbereich der rufende Teilnehmer eingebucht ist.

Günstigerweise wird in Schritt b) die Leitwegadresse durch Präfigierung der gesamten oder eines vorgegebenen Teiles der Zielleitinformation mit einer Rufadresse, mittels welcher ein Dienst zur Herstellung einer Verbindungsstrecke über das Zwischennetz aufrufbar ist, erstellt. Dies verbindet die bereits genannten Vorzüge der Erfindung mit einer besonders einfachen und leicht realisierbaren Methode der Bestimmung der Leitwegadresse.

In einer Variante der Erfindung wird ein vereinfachter Signalisierungsverkehr zwischen den beteiligten Netzknoten, insbesondere in dem Ursprungsnetz, dadurch erreicht, dass bei der Erstellung der Leitwegadresse (Schritt b) eine Korrelationsadresse eingefügt wird, welcher der Verbindungsanforderung entstammende und seitens des Ursprungsnetzes, insbesondere seitens des Dienstesteuerknotens, zwischengespeicherte Daten, z.B. die Rufnummer des Bestimmungsteilnehmers, zugeordnet sind, und dass nachfolgend seitens eines Netzknotens des Bestimmungsnetzes mittels einer spezifischen, die Korrelationsadresse enthaltenden Nachricht die zwischengespeicherten Daten angefordert werden, diese Daten in einer spezifischen Nachricht an den Netzknoten übermittelt werden und aufgrund der so erhaltenen Daten die Verbindungsstrecke in dem Bestimmungsnetz hergestellt wird.

In einer anderen Variante wird bei der Anforderung der Zielleitinformation (Schritt a)
eine erste Anforderungsnachricht an das Heimatregister gesendet wird und von diesem eine Kennung zurückgeliefert, welche eine Besuchervermittlung bezeichnet, in deren Einzugsbereich sich der Bestimmungsteilnehmer aufhält, und
eine zweite Anforderungsnachricht an die durch die Kennung identifizierte Besuchervermittlung gesendet wird und von dieser eine dem Bestimmungsteilnehmer zugeordnete MSRN-Nummer zur weiteren Verwendung als Zielleitinformation zurückgeliefert. Bei dieser Variante des 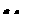 virtuellen Heimatregisters" wird die den gerufenen Teilnehmer betreffende Aufenthaltsinformation seitens des Ursprungsnetzes abgefragt, wodurch seitens des Bestimmungsnetz eine zusätzliche Aufenthaltsinterrogation entfällt, sodass insgesamt eine Vereinfachung und Verringerung des Signslisierungsverkehrs erreicht wird.

Die Erfindung samt weiterer Vorzüge wird im folgenden anhand eines Ausführungsbeispieles näher erläutert, welches die Verbindungsherstellung unter Verwendung von Internettelefonie zwischen zwei mobilen Teilnehmern betrifft. Hierbei werden die beigefügten Figuren herangezogen, welche zeigen:
- Fig. 1: eine schematische Darstellung der am Ausführungsbeispiel beteiligten Netze;
- Fig. 2: Signalisierungsabläufe zu verschiedenen Varianten des Ausführungsbeispiels.

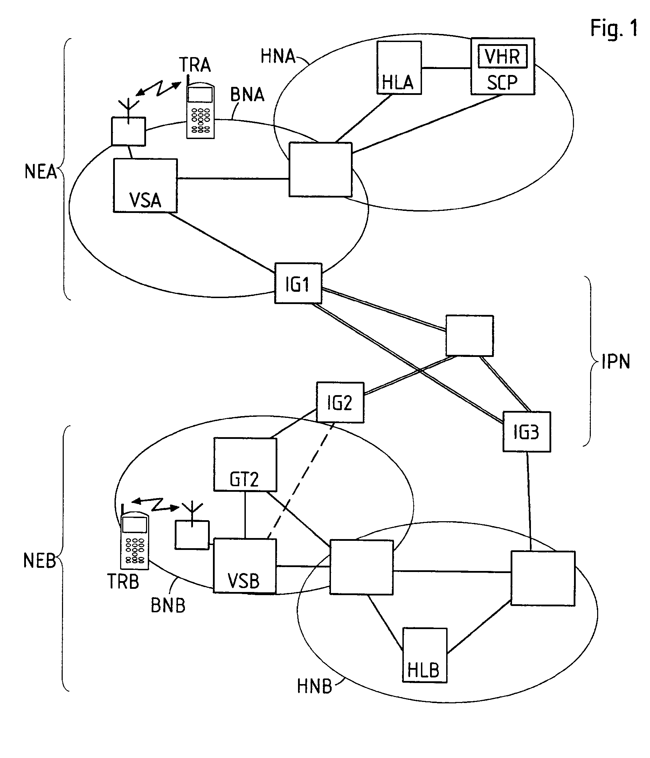

In Fig. 1 ist stellvertretend für den rufenden Teilnehmer TRA dessen Mobil-Endgerät dargestellt, mit welchem sich der Teilnehmer TRA in ein GSM-Netz BNA eingebucht hat. Dieses Netz BNA ist somit das aktuelle Besuchernetz des Teilnehmers TRA. Ebenfalls gezeigt ist jene Mobilvermittlung VSA des Besuchernetzes BNA, in deren Einzugsbereich der Teilnehmer TRA sich befindet und die deshalb als Besuchervermittlung ('visited mobile switching center', VMSC) dem Teilnehmer TRA zugeordnet ist; des weiteren ist die Luftschnittstelle zwischen dem Mobilgerät des Teilnehmer TRA und einer Basisstation der Mobilvermittlung VSA symbolisch dargestellt. Die Vermittlung VSA wird im folgenden auch als Ursprungsnetzknoten bezeichnet. Wie dem Fachmann wohlbekannt, hält die Mobilvermittlung VSA in ihrem sogenannten Besucherregister einen Eintrag betreffend den eingebuchten Teilnehmer TRA und dessen teilnehmerspezifische Daten. Diese erhält es nach bekannter Art von dem Heimatregister HLA des dem Teilnehmer TRA zugeordneten Heimatnetzes HNA. Die beiden genannten GSM-Netze HNA,BNA bilden gemeinsam - möglicherweise zusammen mit weiteren (in Fig. 1 nicht gezeigten) Netzen - einen GSM-Netzverbund NEA, welcher für die Zwecke der Erfindung als ein Telefonnetz betrachtet werden kann, in welchem der Teilnehmer TRA sich bewegen ( 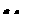 roamen") kann und welches im folgenden als Ursprungs-Telefonnetz oder kurz Ursprungsnetz bezeichnet wird.

Für den Bestimmungsteilnehmer TRB gelten analoge Verhältnisse in Bezug auf das ihm zugeordnete Heimatnetz HNB und das Besuchernetz BNB, in dem sich der Bestimmungsteilnehmer TRB bei einer Mobilvermittlung VSB eingebucht hat. Auch im Falle des Bestimmungsteilnehmers TRB gehören die diesem zugeordneten GSM-Netze HNB,BNB einem GSM-Netzverbund NEB an, welcher im folgenden als Bestimmungs-Telefonnetz oder kurz Bestimmungsnetz bezeichnet wird.

Sowohl auf seiten des Ursprungsnetzes NEA als auch des Bestimmungsnetzes NEB sind in Fig. 1 Zugangsknoten IG1,IG2,IG3 gezeigt, welche in einem Datennetz IPN, z.B. das Internet IPN oder ein anderes, auf dem TCP/IP-Protokoll beruhendes Computernetz, miteinander verbunden sind und über das Datennetz IPN Datenpakete austauschen können. Die Zugangsknoten werden beispielsweise von einem Internettelefonie-Betreiber betreut und für dessen Kunden zur Verfügung gestellt.

Es sei an dieser Stelle darauf hingewiesen, dass in Fig. 1 die Telefonnetze HNA,BNA,HNB, BNB zwar als voneinander verschieden angenommen werden, dies jedoch nicht die Möglichkeit ausschließen soll, dass in besonderen Fällen einzelne oder sogar alle dieser Netze übereinstimmen können. Auch ist nicht auszuschließen, dass die Netze einander geographisch überlappen - dies kann insbesondere für das Datennetz IPN in Bezug auf die beteiligten Telefonnetze der Fall sein.

Wird eine Telefonverbindung nach bekannter Art aufgrund einer Verbindungsanforderung des rufenden Teilnehmers TRA für den Bestimmungsteilnehmer TRB über eine Internettelefonie-Verbindung aufgebaut, so müßte - sofern ein 'Optimal Routing' nicht möglich ist - erst eine Verbindung zum Heimatnetz HNB des Bestimmungsteilnehmers aufgebaut werden, da im Ursprungsnetz zur Leitweglenkung nur die Rufnummer des Betimmungsteilnehmers TRB zur Verfügung steht, welche die Kennung des Heimatnetzes HNB enthält. Deshalb wird die Verbindung in dem Internet IPN zu einem Zugangsknoten IG3, welcher sich beispielsweise in dem Einzugsbereich des Heimatnetzes HNB befindet, geführt und erst von einem Netzknoten des Heimatnetzes HNB zu dem aktuellen Standort des Bestimmungsteilnehmers TRB im Besuchernetz BNB weitergeleitet.

Nach der Erfindung erfolgt eine Optimierung des Verbindungsweges in dem als Zwischennetz verwendeten Datennetz IPN und in dem Bestimmungsnetz NEB dadurch, dass noch vor dem Aufbau der Verbindung eine den aktuellen Aufenthaltsort des Bestimmungsteilnehmers TRB betreffende Information bei dem Heimatregister HLB des Bestimmungsnetzes NEB abgefragt wird und anhand dieser Information eine Leitwegadresse erstellt wird, welche anstelle der Rufadresse, die seitens des rufenden Teilnehmer TRA in der Verbindungsanforderung angegeben worden ist, zum Aufbau der Verbindung und insbesondere der Verbindungsteilstrecke in dem Datennetz IPN verwendet wird.

Vorteilhafterweise ist in dem Ursprungsnetz NEA ein Leitwegdienst eingerichtet, welcher die Anforderung der Zielleitinformation und das Erstellen der Leitwegadresse ausführt und die Leitwegadresse dem Ursprungsnetzknoten zusendet. Der Leitwegdienst kann z.B. in einem Dienstesteuerknoten SCP ausgeführt werden, welcher in dem Ursprungsnetz NEA für die Durchführung von Diensten eingerichtet ist, welche den Netzteilnehmern zur Nutzung angeboten werden. Der Dienstesteuerknoten kann auch als CSE-Knoten nach dem CAMEL-Standard realisiert sein.

Das Routing im Internet erfolgt günstigerweise nach bekannten Verfahren der Internettelefonie, z.B. gemäß dem erwähnten ITU-H.323, von dem Eingangsknoten IG1 zu einem geeigneten Ausgangsknoten IG2. Die beiden Zugangsknoten IG1,IG2 sind als 'Points Of Presence'-Knoten über ein Teilnehmeranschlussprotokoll jeweils an eine Vermittlungsstelle des betreffenden Netzes NEA,NEB angeschlossen. Diese Vermittlungsstelle dient jeweils als Übergangsvermittlung; im Falle des Ausgangsknotens IG2 ist dies die Übergangsvermittlung GT2. Innerhalb des Internet IPN wird gemäß ITU-H.323 als Signalisierung das Protokoll ITU-Q.931 verwendet. Das Routing von dem EingangsIG1 zu dem Ausgangsknoten IP2 wird von einem oder mehreren sogenannten Gatekeepern (in Fig. 1 nicht gezeigt) durchgeführt.

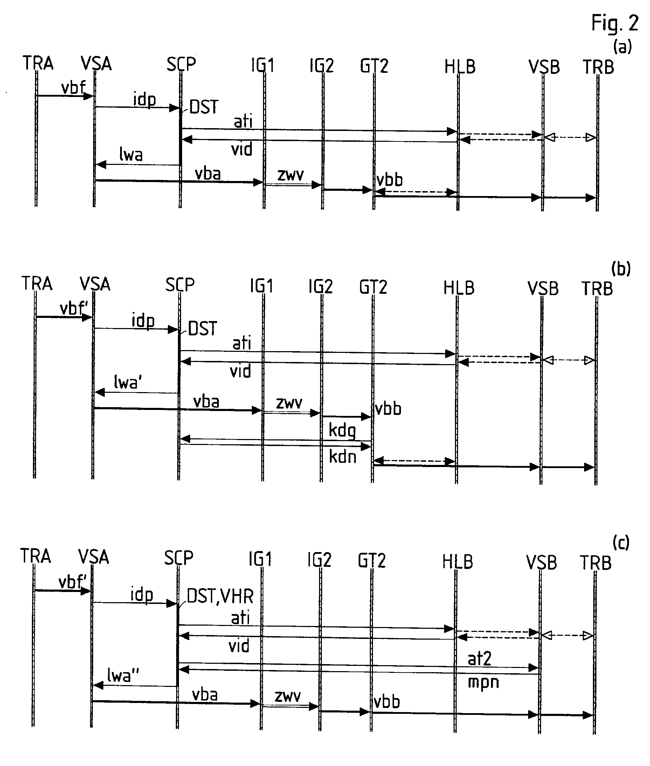

Dies sei im folgenden anhand dreier Abläufe erläutert, welche auch in den drei Signalablaufsdiagrammen (a) bis (c) der Fig. 2 dargestellt sind, in denen die Zeitachse von oben nach unten verläuft. Diese beziehen sich jeweils auf eine beispielhafte Abfolge von Signalen, welche beim Aufbau einer Telefonverbindung von dem rufenden Teilnehmer TRA zu dem Bestimmungsteilnehmer TRB nach der Erfindung zwischen den in Fig. 1 dargestellten Endgeräten und Netzkomponenten ausgetauscht werden, und sind im übrigen lediglich als Beispiele aufzufassen. In den Signalablaufen werden - soweit nicht ausdrücklich anders angemerkt - Nachrichten des INAP-Protokolls ('Intelligent Network Application Part'), wie z.B. des Core INAP nach dem ETSI-Standard 300 374-1, Juli 1994, des Europäischen Normeninstituts für Telekommunikation (ETSI) und des ITU-INAP nach den Standards ITU-Q.1214 und ITU-Q.1218 bzw. ITU-Q.1224 und ITU-Q.1228 der Internationalen Telekommunikations-Vereinigung, bzw. des CAP-Protokolls gemäß den Normen GSM 02.78, 03.78 und 09.78 verwendet, sowie des MAP-Protokolls gemäß den Normen GSM 09.02; in anderen Ausführungsformen sind die entsprechenden, dem Fachmann bekannten Signalisierungen zu verwenden.

Bezugnehmend auf den ersten Signalablauf Fig. 2(a) sendet das Endgerät des rufenden Teilnehmers TRA, beispielsweise weil dieser die Rufnummer des gewünschten Bestimmungsteilnehmers TRB gewählt hat, an den zugeordneten Ursprungsnetzknoten VSA eine Verbindungsanforderung vbf in Form einer SETUP-Nachricht. Auf seiten der Vermittlung VSA wird aufgrund des Teilnehmerprofils des rufenden Teilnehmers TRA erkannt, dass für die angeforderte Verbindung ein Leitwegdienst DST aufzurufen ist. Beispielsweise enthält das Teilnehmerprofil die Informationen, für welche Gruppen von Rufnummern der Leitwegdienst aufzurufen ist und mit welchem Dienstesteuerknoten SCP für diesen Zweck Transaktionen durchzuführen sind. Durch diese Verankerung des Dienstaufrufs als sogenanntes IN-Triggering im Teilnehmerprofil des rufenden Teilnehmers TRA wird erreicht, dass der Teilnehmer TRA nicht mehr explizit die Nummer des Internettelefonie-Anbieters anwählen muss.

Von der Vermittlungsstelle VSA wird somit ein Dialog zu dem Dienstesteuerknoten SCP aufgebaut. Dies geschieht in dem Beispiel mittels einer IDP-Nachricht idp ('Initial Detection Point'), welche an den Dienstesteuerknoten SCP gesendet wird und nach bekannter Art Rufnummer und Aufenthaltsort des rufenden Teilnehmer TRA, die Rufnummer des Bestimmungsteilnehmers TRB, den gewünschten Dienst usw. enthält. Aufgrund der Nachricht idp wird seitens des Dienstesteuerknoten SCP der Leitwegdienst DST für den gewünschten Verbindungsaufbau aktiviert.

Durch den Leitwegdienst DST wird der Aufenthaltsort des Bestimmungsteilnehmers TRB nach bekannter Art abgefragt. Hierfür wird eine sogenannte 'AnyTimeInterrogation'-Nachricht ati an das dem Bestimmungsteilnehmer TRB zugeordnete Heimatregister HLB gesendet. Das Heimatregister HLB bestimmt nun nach bekannter Art den Aufenthaltsort des gewünschten Teilnehmers. Der damit möglicherweise verbundene Nachrichtenaustausch ist in den Signalabläufen der Fig. 2 durch unterbrochene Pfeile zwischen Heimatregister HLB, dem aktuellen Besuchervermittlungsknoten VSB des Bestimmungsteilnehmers TRB und dem Bestimmungsteilnehmer TRB selbst symbolisiert. Das Heimatregister HLB liefert dem Dienstesteuerknoten SCP in einer Antwortnachricht die Besucherregister-Identifikationsnummer vid ('visiting location register identification', vlrId) der Besuchervermittlung VSB, welche z.B. nach dem Fachmann wohlbekannter Art als E.164-Adresse realisiert ist; soweit gewünscht, können in der Antwortnachricht auch zusätzliche Informationen betreffend die Erreichbarkeit des Bestimmungsteilnehmers TRB gesendet werden. Die Antwortnachricht bzw. die Identifikationsnummer vid stellen in diesem Beispiel die Zielleitinformation nach der Erfindung dar.

Aufgrund der Antwortnachricht wird in dem Leitwegdienst DST erfindungsgemäß eine neue Zielrufnummer dadurch erstellt, dass der Besucherregister-Identifikationsnummer vid die Adresse des Internettelefonie-Anbieters, welche beispielsweise die Rufadresse eines geeigneten Zugangsknotens IG1 spezifiziert, als Präfix vorangestellt wird. Diese Zielrufnummer dient nun gemeinsam mit der Teilnehmerrufnummer des Bestimmungsteilnehmers TRB als Leitwegadresse lwa für den Aufbau der gewünschten Telefonverbindung unter Verwendung des Internet als Zwischennetz IPN. Der Leitwegdienst DST leitet die Leitwegadresse lwa dem Ursprungsnetzknoten VSA zu, schließt den Dialog mit der Vermittlung VSA ab und wird beendet. In dem hier betrachteten Beispiel wird die Leitwegadresse lwa in Form einer CONNECT-Nachricht gesendet, in der neben der gepräfixten Identifikationsnummer die Teilnehmerrufnummer in dem sogenannten RedirectingPartyId-Feld der Nachricht übertragen wird. Dabei ist die Verbindungsumlenkung auf den Zugangsknoten IG1 in dem Feld 'redirectionInformation' durch Ausnutzung eines bisher nicht verwendeten Wertes zu indizieren, beispielsweise durch den Wert redirectionReason = optimizedIP-Routing = 1111 (binär).

Anstelle der Besucherregister-Identifikationsnummer im E.164-Format, die eine beträchtliche Länge aufweist, kann in der Leitwegadresse lwa zur Angabe des Besuchervermittlung VSB eine abgebildete Identifikationsnummer verwendet werden, z.B. ein Zeichengabepunktcode ('Signalling Point Code', SPC), der seitens des Dienstesteuerknotens SCP dem Besucherknoten VSB zugeordnet ist. Dies ist insbesondere dann vorteilhaft, wenn die Identifikationsnummer im E.164-Format für die zu verwendende Nachricht zu lang wäre.

Der Ursprungsnetzknoten VSA empfängt die CONNECT-Nachricht bzw. die Leitwegadresse lwa und beginnt aufgrund dessen eine Verbindungsherstellung unter Verwendung der Zielrufnummer als Rufadresse aus. Die Verbindungsherstellung geschieht beruhend auf der Zielrufnummer nach bekannter Art. Die gewünschte Verbindung wird unter Verwendung von Teilverbindungen der beteiligten Netze hergestellt, nämlich
- der Verbindung vba im Ursprungsnetz NEA von dem rufenden Teilnehmer TRA zu dem Zugangsknoten IG1 ( 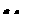 Eingangsknoten"),
- der Zwischenverbindung zwv, welche im Zwischennetz IPN zwischen dem Eingangsknoten IG1 zu einem zweiten Zugangsknoten IG2 ( 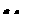 Ausgangsknoten") zur Verfügung gestellt wird, und
- der Verbindung vbb im Bestimmungsnetz NEB von dem Ausgangsknoten IG2 über eine Übergangsvermittlung GT2 zu dem Bestimmungsteilnehmer TRB.

Hierbei wird die Teilverbindung vba im Ursprungsnetz aufgrund des Präfix des Internettelefonie-Ambieters zu dem Eingangsknoten IG1 hergestellt. Gegenüber dem als Eingangknoten verwendeten Zugangsknoten IG1 wird der Verbindungswunsch in einer SETUP-Nachricht signalisiert. In dem redirectionInformation-Feld dieser Nachricht ist der Parameter 'redirectionReason' auf den Wert 'optimizedIP-Routing' gesetzt; als Indikation wird ein Wert verwendet, der in bisher verwendeten Verfahren nicht verwendet wird, z.B. 1111(binär). (Vgl. ITU-T Q.763, Version 3/93.) Dieser Parameter zeigt somit an, dass die mitgelieferte RedirectingPartyId eine als tatsächliche Zielrufnummer zu verwendende Rufadresse, zu der eine Verbindung aufgebaut werden soll, enthält.

In einer alternativen Ausführungsform können die genannten Informationen auch in Erweiterungsfeldern der entsprechenden Nachrichten übertragen werden, z.B. in den sogenannten 'extensions'-Feldern des CAP/INAP bzw. den 'Facility'-Feldern des DSS.1-Protokolls. Diese Variante vermeidet eine möglicherweise auftretende Kollision mit bestehenden Parametern.

Nach der Zielbewertung in dem Internet IPN wird von dem Eingangsknotens IG1 die Zielrufnummer des Bestimmungsteilnehmers an den Ausgangsknoten IG2 bzw. die Übergangsvermittlung GT2 gesendet. Dabei wird als Zielrufnummer die als redirectionInformation angegebene Teilnehmerrufnummer des Bestimmungsteilnehmers TRB verwendet, welche ja eine im Bestimmungsnetz NEA gültige Rufnummer ist, in diesem Fall z.B. eine MSISDN-Nummer. Auf seiten des Bestimmungsnetzes NEB wird in der Übergangsvermittlung GT2, welche diese Zielrufnummer (MSISDN-Nummer) empfängt, ein Routing der Verbindung gemäß den GSM-Standards 02.79 und 03.79 (vgl. z.B. Abschnitt 4.1, sogenanntes 'optimal routing'), gegebenenfalls mit einer Heimatregister-Abfrage, durchgeführt.

Das soeben dargestellte, erfindungsgemäße Verfahren (Fig. 2(a)) setzt zu seiner Durchführbarkeit voraus, dass folgende Bedingungen erfüllt sind:
- Die Teilnehmerrufnummer des Bestimmungsteilnehmers muss über die Zwischenamtssignalisierung beider Netze NEA und NEB und die im Zwischennetz IPN verwendete Signalisierung übertragbar sein. Dies erfolgt in den Netzen NEA,NEB mit Hilfe der erweiterten SETUP-Nachricht wie weiter oben erläutert.
- Der als Übergangsknoten dienende Netzknoten GT2 muss ein Routing (z.B. 'optimal routing') gemäß den genannten GSM-Standards zu dem gewünschten Heimatregister unterstützen. Sollte in diesem Knoten die genannte Funktionalität nicht unterstützt sein, so müsste auf dem Wege eines sogenannten 'Overlay' die Verbindung über einen weiteren (nicht gezeigten) Knoten des Besuchsnetzes BNB aufgebaut werden, der die geforderten Routing-Funktionen unterstützt.
- Der als Übergangsknoten dienende Netzknoten GT2 muss sich im gleichen Netz BNB befinden wie der Ausgangsknoten IG2. Ansonsten würde bei einer Weiterleitung in ein anderes Netz - dem Besuchernetz des Bestimmungsteilnehmer TRB - möglicherweise ein Routing zum Heimatnetz HNB des Bestimmungsteilnehmers durchgeführt.

Die Erfindung ermöglicht eine gesamte Optimierung der Verbindung von dem rufenden Teilnehmer zu dem Bestimmungsteilnehmer, insbesondere auch hinsichtlich der Teilverbindung im Bestimmungsnetz.

Ein zweiter erfindungsgemäßer Lösungsansatz vermeidet eine zweiteilige Leitwegadresse durch den Einsatz eines zusätzlichen Dialogs zwischen dem Dienstesteuerknoten SCP und dem Netzknoten GT2.

Auch hier sendet das Endgerät des rufenden Teilnehmers TRA, beispielsweise weil dieser die Rufnummer des gewünschten Bestimmungsteilnehmers TRB gewählt hat, an den zugeordneten Ursprungsnetzknoten VSA eine Verbindungsanforderung vbf in Form einer SETUP-Nachricht. Auf seiten der Vermittlung VSA wird anhand der Verbindungsanforderung vbf in Verbindung mit der spezifischen Subskription des rufenden Teilnehmers TRA für den Leitwegdienst DST erkannt, dass für die angeforderte Verbindung ein Dienst des Dienstesteuerknoten SCP aufzurufen ist.

Ebenso wie im Ablauf (a) wird von der Vermittlungsstelle VSA wird mittels einer IDP-Nachricht idp ein Dialog zu dem Dienstesteuerknoten SCP aufgebaut, aufgrund dessen seitens des Dienstesteuerknoten SCP der Leitwegdienst DST für den gewünschten Verbindungsaufbau aktiviert, durch den Leitwegdienst DST der Aufenthaltsort des Bestimmungsteilnehmers TRB abgefragt und eine Antwortnachricht des Heimatregisters HLB empfangen, welche die benötigte Zielleitinformation liefert.

In diesem Ablauf (Fig. 2(b)) werden nun in dem Leitwegdienst DST die Daten der IDP-Nachricht idp zwischengespeichert, für diese eine sogenannte Korrelationsidentität krd generiert, sowie aufgrund dieser Daten und der Antwortnachricht des Heimatregisters HLB eine Leitwegadresse lwa' erstellt, welche nun aus
1. der Rufadresse des Internettelefonie-Abbieters, gefolgt von
2. der Adresse eines Übergangsknotens IG2, gefolgt von
3. der Adresse des Dienstesteuerknotens SCP und
4. der Korrelationsidentitär krd
   zusammengesetzt ist. Der Leitwegdienst DST sendet die Leitwegadresse lwa' dem Ursprungsnetzknoten VSA in Form einer CONNECT-Nachricht, schließt den Dialog mit der Vermittlung VSA ab und wird beendet; die zwischengespeicherten IDP-Daten zusammen mit der zugehörenden Korrelationsidentität krd bleiben vorerst erhalten.

Der Ursprungsnetzknoten VSA empfängt die CONNECT-Nachricht bzw. die Leitwegadresse lwa' und beginnt aufgrund dessen eine Verbindungsherstellung. Die Verbindungsherstellung geschieht beruhend auf der Leitwegadresse lwa' im Ursprungsnetz NEA und Internet IPN bis Übergangsvermittlung GT2 analog den entsprechenden Schritten des Ablaufes (a).

Bei der Initiierung des Verbindungsaufbaus der Teilverbindung vbb im Bestimmungsnetz NEB empfängt die Übergangsvermittlung GT2 von seiten des Ausgangsknotens IG2 als Zielrufnummer die Adresse des Dienstesteuerknotens SCP mit der Korrelationsidentität krd als Komponenten 3 und 4 der Leitwegadresse lwa'; die vorangehenden Komponenten wurden nach bekannter Weise im Laufe des Verbindungsroutings abgeschnitten. Die Übergangsvermittlung GT2 startet nun aufgrund dieser Zielrufnummer einen 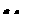 Korrelationsdialog" kdg,kdn zu dem Dienstesteuerknoten SCP. Die den Dialog einleitende Nachricht ist beispielsweise. eine IDP-Nachricht mit der Korrelationsidentität krd. Über die Korrelationsidentität krd wird in dem Dienstesteuerknoten SCP der Kontext zu den zwischengespeicherten Daten hergestellt, und der Dialog mit einer an die Vermittlung GT2 gesendeten Nachricht kdn in Form einer CONNECT-Nachricht, welche die vom rufenden Teilnehmer bei der Verbindungsanforderung angegebene Zielrufnummer des Bestimmungsteilnehmers TRB enthält, abgeschlossen.

In der Übergangsvermittlung GT2 wird aufgrund der so erhaltenen Zielrufnummer ein Routing zu dem Bestimmungsteilnehmer durchgeführt. Der weitere Teil der Herstellung der Teilverbindung vbb erfolgt nach bekannter Art gemäß den GSM-Standards.

Zur Durchführbarkeit dieses erfindungsgemäßen Verfahrens (Fig. 2(b)) müssen folgende Bedingungen erfüllt sein:
- Der Dienstesteuerknoten SCP muss dahingehend ausgelegt sein, über den in Frage kommenden Anwendungsbereich, d.h. den Bereich der eingebundenen Bestimmungsnetze NEB, für eine Vielzahl von Übergangsknoten GT2 bzw. Zugangsknoten IG2 deren Adressen zur Verfügung zu stellen.
- Die als Übergangsknoten GT2 verwendbaren Netzknoten müssen dahingehend eingerichtet sein, beim Empfang der Zielrufnummer ein IN-Triggering zur Durchführung des Korrelationsdialogs durchzuführen.
- Ebenso wie unter Fig. 2(a) diskutiert muss der als Übergangsknoten dienende Netzknoten GT2 ein Routing (z.B. 'optimal routing') gemäß den genannten GSM-Standards zu dem gewünschten Heimatregister unterstützen.
- Ebenso wie unter Fig. 2(a) diskutiert muss der als Übergangsknoten dienende Netzknoten GT2 sich im gleichen Netz BNB befinden wie der Ausgangsknoten IG2.

In einem dritten Signalablauf Fig. 2(c) ist eine weitere, bevorzugte Ausführungsform der Erfindung dargestellt, worin auf seiten des Dienstesteuerknotens SCP ein 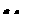 virtuelles Heimatregister" VHR eingerichtet ist. Das 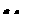 virtuelle Heimatregister" VHR dient dazu, für einen Teilnehmer, der durch seine IMSI-Nummer spezifiziert wird, die zugehörende MSRN-Nummer von einem frei wählbaren Besucherregister im eigenen oder in einem fremden Netz anzufordern und zu empfangen. Im Unterschied zu bekannten Realisierungen von Heimatregistern stimmt hier nicht notwendigerweise die Adresse des 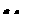 virtuellen Heimatregisters" VHR bzw. des Dienstesteuerknotens SCP mit der Netzidentität, welche in einer IMSI-Nummer spezifiziert wird, überein. Hierbei wird der Umstand ausgenutzt, dass in den gebräuchlichen Mobilfunksystemen eine strikte Trennung zwischen Routing-Daten und Benutzerdaten besteht. Allerdings ist eine notwendige Voraussetzung, dass das Netz HNA, zu dem der Dienstesteuerknoten SCP gehört, im Sinne eines Roaming-Abkommen mit dem Besuchernetz BNB des gerufenen Teilnehmers TRB verbunden ist, weil sonst das Besuchsnetz BNB verweigern würde, dem Dienstesteuerknoten SCP eine Roamingnummer zurückzuliefern. Durch das 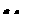 virtuelle Heimatregister" kann eine Heimatregister-Interrogation von dem Netz NEA des rufenden Teilnehmers TRA aus durchgeführt werden, im Gegensatz zu den vorhergehenden Beispielen (Fig.2 (a) und (b)), in denen die Heimatregister-Interrogation im Besuchsnetz BNB des Bestimmungsteilnehmers TRB stattfand.

Das 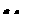 virtuelle Heimatregister" VHR kann in dem Dienstesteuerknoten SCP programmtechnisch nach bekannter Art realisiert werden, wobei der Dienstesteuerknoten SCP das MAP-Protokoll für die Heimatregister-Interrogation unterstützen muss.

Wie in den vorhergehenden Abläufen sendet das Endgerät des rufenden Teilnehmers TRA an den zugeordneten Ursprungsnetzknoten VSA eine Verbindungsanforderung vbf in Form einer SETUP-Nachricht. Wie bereits erläutert, wird auf seiten der Vermittlung VSA erkannt, dass für die angeforderte Verbindung ein Dienst des Dienstesteuerknoten SCP aufzurufen ist, von der Vermittlungsstelle VSA wird mittels einer IDP-Nachricht idp ein Dialog zu dem Dienstesteuerknoten SCP aufgebaut und aufgrund dessen seitens des Dienstesteuerknoten SCP der Leitwegdienst DST für den gewünschten Verbindungsaufbau aktiviert und durch den Leitwegdienst DST der Aufenthaltsort des Bestimmungsteilnehmers TRB abgefragt. In einer Antwortnachricht des Heimatregisters HLB wird wie oben dargelegt die Besucherregister-Identifikationsnummer vid der Besuchervermittlung VSB sowie gegebenenfalls zusätzliche Informationen betreffend die Erreichbarkeit des Bestimmungsteilnehmers TRB empfangen.

Im Unterschied zu den obigen Abläufen wird nun in diesem Ablauf (Fig. 2(c)) seitens des 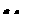 virtuellen Heimatregisters" VHR mittels einer MSRN-Anfrage at2 in Form einer erweiterten AnyTimeInterrogation-Nachricht, in der die IMSI-Nummer des Bestimmungsteilnehmers TRB angegeben ist, dessen MSRN-Nummer von der Besuchervermittlung VSB abgefragt. Die Struktur dieser erweiterten AnyTimeInterrogation-Nachricht ist beispielhaft in Tabelle 1 gemäß ASN.1-Syntax (vgl. ITU-X.208 und GSM 09.02) dargestellt.

Die Parameter 'IN-Subscription-Terminating' und 'IMSI-Provisioning' sind Erweiterungen gegenüber der aus GSM 09.02 bekannten AnyTimeInterrogation-Nachricht. Wenn diese Parameter angegeben werden, so zeigen sie jeweils an, dass das abgefragte Heimatregister die entsprechende Information an den Dienstesteuerknoten liefern soll, nämlich die Subskription eines IN-Dienstes für ankommende Verbindungen bzw. die IMSI-Nummer des Bestimmungsteilnehmers.

Des weiteren wird seitens des Dienstesteuerknotens SCP eine

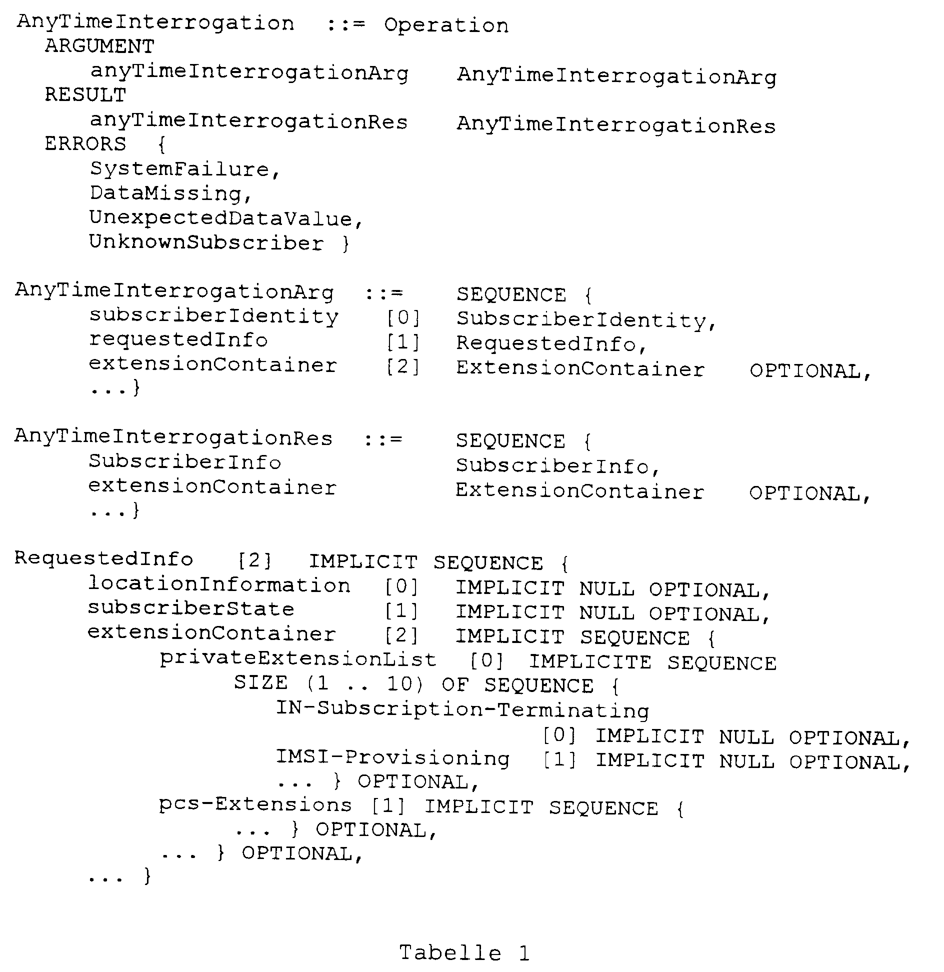

erweiterte Teilnehmer-Subskriptionsinformation (Klasse 'SubscriberInfo') verwendet. Ein Beispiel hierfür ist in ASN.1 in Tabelle 2 dargestellt. Darin sind die Parameter 'IN-Subscription-Terminating' und 'Imsi' Erweiterungen. Der Parameter 'IN-Subscription-Terminating' zeigt an, ob der Bestimmungsteilnehmer einen IN-Dienst für ankommende Verbindungen subskribiert hat. Falls dies zutrifft, unterbleibt eine Routenoptimierung nach dem anhand Fig. 2(c) dargestellten Verfahren. Der Parameter 'Imsi' enthält die IMSI-Nummer des Bestimmungsteilnehmers; dieser Parameter wird benötigt, damit die MSRN-Nummer durch den Dienstesteuerknoten SCP als 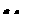 virtuelles Heimatregister" abrufbar ist.

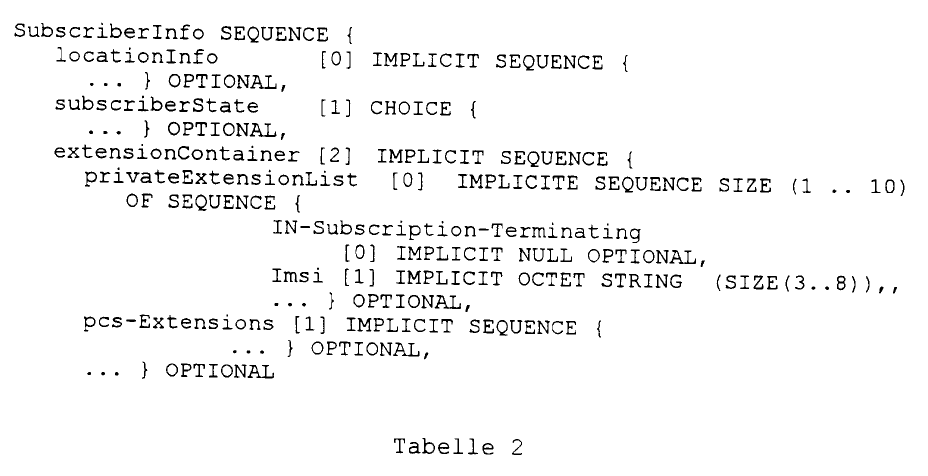

In den ASN.1-Texten der Tabellen sind bekannte Code-Teile, sofern sie für das Verständnis der Erfindung unwesentlich sind, der Kürze halber ausgelassen; ausgelassene Code-Teile sind durch Auslassungspunkte gekennzeichnet.

Die MSRN-Nummer wird in einer MSRN-Provisionsnachricht mpn in einer sogenannten 'ProvideRoamingNumber-Ack'-Nachricht des MAP-Protokolls an das 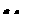 virtuelle Heimatregister" VHR bzw. den Leitwegdienst DST gesendet. Die Provisionsnachricht mpn kann hierbei von der Vermittlung VSB an den Dienstesteuerknoten SCP direkt oder mittelbar über das Heimatregister HLB gesendet werden.

Die Provisionsnachricht mpn der Besuchervermittlung VSB bzw. die MSRN-Nummer repräsentiert in diesem Beispiel die Zielleitinformation. Nun wird eine neue Zielrufnummer dadurch erstellt, dass der MSRN-Nummer die Adresse des Internettelefonie-Anbieters als Präfix vorangestellt wird. Der Leitwegdienst DST sendet diese Zielrufnummer als Leitwegadresse lwa'' dem Ursprungsnetzknoten VSA in Form einer CONNECT-Nachricht, schließt den Dialog mit der Vermittlung VSA ab und wird beendet.

Der Ursprungsnetzknoten VSA empfängt wie bereits beschrieben die CONNECT-Nachricht bzw. die Leitwegadresse lwa'' und beginnt aufgrund dessen eine Verbindungsherstellung, beruhend auf der Leitwegadresse lwa'' im Ursprungsnetz NEA und Internet IPN bis Übergangsvermittlung GT2 analog den entsprechenden Schritten des Ablaufes (a). Hierbei erfolgt in dem Zwischennetz das Routing der Zwischenverbindung zwv nach bekannter Art anhand der in der MSRN-Nummer enthaltenen Informationen betreffend den Aufenthaltsbereich des zugeordneten Teilnehmers.

Bei der Initiierung des Verbindungsaufbaus der Teilverbindung vbb im Bestimmungsnetz NEB empfängt die Übergangsvermittlung GT2 von seiten des Ausgangsknotens IG2 als Zielrufnummer die MSRN-Nummer; das Präfix, welches den Internettelefonie-Dienst spezifiziert, wurde bereits im Eingangsknoten IG1 abgeschnitten. Aufgrund dieser Zielrufnummer stellt die Übergangsvermittlung GT2 nach bekannter Art eine Verbindung zu dem angeforderten Ziel TRB her, welche für die gewünschte Verbindung zwischen den Teilnehmern TRA,TRB als Teilverbindung vbb dient.

Ein besonderer Vorteil dieses zuletzt genannten Ausführungsbeispieles ist, dass infolge der Verwendung der MSRN-Nummer die Erfordernis entfällt, dass der Ausgangsknoten IG2 in dem Besuchernetz BNB liegen muss, in dem sich der Bestimmungsteilnehmer TRB gerade aufhält. Dies gestattet eine beträchtliche Reduzierung der im Dienstesteuerknoten SCP zu verwaltenden Zugangsknoten IG1,IG2,IG3 des Zwischennetzes.

Anstelle des oben behandelten Routing über ein Zwischennetz IPN, welches durch das Internet oder ein anderes, auf dem TCP/IP-Protokoll beruhenden Datennetzes realisiert ist, kann für die Erfindung auch ein firmeneigenes Datennetz (z.B. ein sogenanntes 'corporate network' oder ein Intranet) oder ein anderes paketorientiertes Kommunikationsnetz verwendet werden.

Auch kann, wenn mehrere Zwischennetze verwendbar sind, die Auswahl des geeignetsten Zwischennetzes jeweils für eine Verbindungsanforderung durch den Dienstesteuerknoten SCP bzw. den Leitwegdienst DST anhand vorgegebener Kritereien hinsichtlich z.B. der Tageszeit, des Aufenthaltsorts der beteiligten Teilnehmer, des verwendeten Gebührenmodells etc. vorgenommen werden.

## Patentansprüche

1. Verfahren zum Herstellen einer Telekommunikationsverbindung in Telefonnetzen (NEA,NEB) unter Verwendung eines paketorientierten Kommunikationsnetzes, in welchem zwischen Zugangsknoten als Verbindungsteilstrecken für Telefonverbindungen einsetzbare Zwischenverbindungen herstellbar sind, als Zwischennetz (IPN),
bei welchem aufgrund einer Verbindungsanforderung eines rufenden Teilnehmers (TRA) eines Ursprungs-Telefonnetzes (NEA) für eine Verbindung zu einem Bestimmungsteilnehmer (TRB), welcher als mobiler Teilnehmer in einem Bestimmungs-Telefon-netz (NEB) mit einem Heimatregister (HLB) zur Speicherung von Teilnehmer-Erreichbarkeitsinformationen angemeldet ist, wobei die Verbindungsanforderung bei einem Ursprungs-Netzknoten (VSA) des Ursprungsnetzes (NEA) eintrifft, eine Verbindung
- von dem rufenden Teilnehmer (TRA) in dem Ursprungsnetz (NEA) zu einem Zugangsknoten (IG1), welcher als Eingangsknoten an das Ursprungsnetz angeschlossen ist,
- von dem Eingangsknoten (IG1) über eine Verbindungsteilstrecke (zwv) in dem Zwischennetz (IPN) zu einem anderen Zugangsknoten (IG3), welcher als Ausgangsknoten an das Bestimmungsnetz angeschlossen ist, und
- von dem Zugangsknoten (IG3) in das Bestimmungsnetz (NEB) hergestellt sowie in dem Bestimmungsnetz zu dem Bestimmungsteilnehmer geleitet wird,
**dadurch gekennzeichnet,**
dass seitens des Ursprungsnetzes (NEA)
a) zumindest eine spezifische Anforderungsnachricht (ati) an das Heimatregister (HLB) und/oder eine Besuchervermittlung (VSB) des Bestimmungsnetzes (NEB) gesendet wird und eine den aktuellen Aufenthaltsbereich des Bestimmungsteilnehmers betreffende Zielleitinformation (vid,mpn) entgegengenommen wird,
b) anhand dieser Zielleitinformation (vid,mpn) eine Leitwegadresse (lwa) erstellt wird, welche neben Zielinformation betreffend den Bestimmungsteilnehmer (TRB) und/oder eine Leitwegführung im Bestimmungsnetz (NEB) Trägerinformation betreffend die Herstellung einer Verbindungsstrecke über das Zwischennetz (IPN) aufweist, und
c) die so erhaltene Leitwegadresse (lwa) als Rufadresse für die Herstellung einer Verbindung über das Zwischennetz (IPN) zu dem Bestimmungsteilnehmer (TRB) verwendet wird.

2. Verfahren nach Anspruch 1,
**dadurch gekennzeichnet,** dass der Ursprungsnetzknoten (VSA) aufgrund der Verbindungsanforderung (vbf) einen Dienst (DST) eines Dienstesteuerknotens (SCP) des Ursprungsnetzes aufruft, durch welchen die Anforderung der Zielleitinformation (vid) und das Erstellen der Leitwegadresse (lwa) ausgeführt und die Leitwegadresse (lwa) dem Ursprungsnetzknoten (VSA) zugeleitet wird.

3. Verfahren nach Anspruch 1 oder 2,
**dadurch gekennzeichnet,** dass als Zwischennetz (IPN) ein auf dem TCP/IP-Protokoll beruhendes Datennetz, z.B. das Internet, verwendet wird.

4. Verfahren nach einem der Ansprüche 1 bis 3,
**dadurch gekennzeichnet,** dass der Bestimmungsteilnehmer (TRB) in einem Mobilfunknetzverbund (NEB), insbesondere GSM-Netzverbund, angemeldet ist, in welchem die dem Teilnehmer zugeordneten Erreichbarkeitsinformationen seitens des Heimatregisters (HLB) des dem Teilnehmer zugeordneten Heimatnetzes gespeichert werden.

5. Verfahren nach Anspruch 4,
**dadurch gekennzeichnet,** dass die Zielleitinformation (vid) das Besuchernetz (BNB) angibt, in welches der Bestimmungsteilnehmer (TRB) eingebucht ist.

6. Verfahren nach einem der Ansprüche 1 bis 5,
**dadurch gekennzeichnet,** dass der Ursprungs-Netzknoten (VSA) ein Mobilvermittlungsknoten eines Mobilfunknetzes bzw. -netzverbundes (NEA) ist, in dessen Einzugsbereich der rufende Teilnehmer (TRA) eingebucht ist.

7. Verfahren nach einem der Ansprüche 1 bis 6,
**dadurch gekennzeichnet,** dass in Schritt b) die Leitwegadresse (lwa) durch Präfigierung der gesamten oder eines vorgegebenen Teiles der Zielleitinformation (vid,mpn) mit einer Rufadresse, mittels welcher ein Dienst zur Herstellung einer Verbindungsstrecke über das Zwischennetz (IPN) aufrufbar ist, erstellt wird.

8. Verfahren nach einem der Ansprüche 1 bis 7,
**dadurch gekennzeichnet,**
dass bei der Erstellung der Leitwegadresse (lwa') (Schritt b) eine Korrelationsadresse eingefügt wird, welcher der Verbindungsanforderung (vbf) entstammende und seitens des Ursprungsnetzes (NEA), insbesondere seitens des Dienstesteuerknotens (SCP), zwischengespeicherte Daten, z.B. die Rufnummer des Bestimmungsteilnehmers, zugeordnet sind,
und dass nachfolgend seitens eines Netzknotens (GT2) des Bestimmungsnetzes (NEB)mittels einer spezifischen, die Korrelationsadresse enthaltenden Nachricht (kdg) die zwischengespeicherten Daten angefordert werden, diese Daten in einer spezifischen Nachricht (kdn) an den Netzknoten (GT2) übermittelt werden und aufgrund der so erhaltenen Daten die Verbindungsstrecke in dem Bestimmungsnetz (NEB) hergestellt wird.

9. Verfahren nach einem der Ansprüche 1 bis 8,
**dadurch gekennzeichnet,** dass bei der Anforderung der Zielleitinformation (Schritt a)
eine erste Anforderungsnachricht (ati) an das Heimatregister (HLB) gesendet wird und von diesem eine Kennung (vid) zurückgeliefert wird, welche eine Besuchervermittlung (VSB) bezeichnet, in deren Einzugsbereich sich der Bestimmungsteilnehmer (TRB) aufhält, und
eine zweite Anforderungsnachricht (at2) an die durch die Kennung (vid) identifizierte Besuchervermittlung (VSB) gesendet wird und von dieser eine dem Bestimmungsteilnehmer (TRB) zugeordnete MSRN-Nummer (mpn) zur weiteren Verwendung als Zielleitinformation zurückgeliefert wird.
